# EUROPEAN PATENT APPLICATION

(11) **EP 4 660 334 A1**
(43) Date of publication of application: **10.12.2025**
(21) Application number: 24750460.8
(22) Date of filing: 17.01.2024
(51) Int. Cl.: C22B 26/12, C22B 9/16, C22B 7/00, H01M 10/54

(54) **METHOD FOR RECOVERING LITHIUM FROM WASTE LITHIUM BATTERIES**

(30) Priority: 30.01.2023 KR 20230011932
(71) Applicant: Young Poong Corporation, Seoul 06110 (KR)
(72) Inventor: MOON, Nam Il, Ulju-gun, Ulsan 44920 (KR); LEE, Ho Jo, Gunsan-si, Jeollabuk-do 54096 (KR); KIM, Eung Bae, Cheonan-si, Chungcheongnam-do 31005 (KR); YOO, Su Hwan, Seoul 05003 (KR)
(74) Representative: Habermann, Hruschka & Schnabel
(86) International application number: PCT/KR2024/000845
(87) International publication number: WO 2024/162658

(57) **Abstract**

The present invention relates to a method for efficiently recovering valuable metals from end-of-life waste lithium batteries by dry molten smelting and, more particularly, to a method for recovering lithium by mixing ground or crushed waste lithium batteries with a flux including a Ca compound and a sulfur component and melting same at a high temperature of 1300°C or higher, and then obtaining a lithium-sulfide compound (Li2SO4) volatilizing therefrom.

## Description

### Technical Field

The present disclosure relates to a method for efficiently recovering valuable metals from end-of-life waste lithium batteries in a dry molten smelting and, more particularly, to a lithium recovery method wherein a flux including a Ca compound and a sulfur component are mixed with ground or crushed waste lithium battery cells, followed by melting the same at a high temperature of 1300°C or higher, and then a lithium-sulfur compound (Li2SO4) volatilized therefrom is obtained.

### Background Art

Waste batteries are created because primary batteries or secondary batteries, which are used daily as power sources of various electronic devices such as mobile phones, laptop computers, cassette toys, and emergency powers, reach the end of their lifespan.

These waste batteries contain hazardous metals such as lead, cadmium, and mercury, and KOH, NH4Cl, lithium salt, H2SO4, and organic solutions are used as electrolytes; so, the impact on the environment may not be ignored. In addition, since these batteries contain valuable metals such as silver, cobalt, nickel, zinc, manganese, and lithium, recycling of waste batteries has been required to protect environment and efficiently use limited resources.

Particularly, demand for lithium-ion batteries (LiB) has been increasing along with the portable electronic device market since the 1990s, and demand has recently increased further worldwide due to rapid expansion of the electric vehicle market.

Accordingly, the demand will much exceed the volume of lithium supplied from the natural resources in the near future, which may bring instability to a lithium resource supply. Further, waste batteries which are continuously accumulated could also yield environmentally big problems.

To solve these problems, it is very important to recycle used lithium secondary batteries. That is, if usable materials may be recovered from the waste batteries, it may be possible to extract fewer raw materials from the limited sources of supply underground. In addition, if waste LiB may be recycled, serious negative environmental impacts caused by mining and processing ores could be avoided.

Methods for recovering valuable metals contained in waste batteries include hydrometallurgy and pyrometallurgy.

Hydrometallurgy includes pretreatment followed by leaching and selective precipitation for recovering cathode materials, and additional purification and recovery techniques such as solvent extraction for exchanging ions and extracting valuable metals *(see* KR 10-2019-0084081). Some hydrometallurgy processes have shortcomings of relatively long leaching times and low leaching efficiency rates due to the strong binding forces of high valance state of positive electrode active materials and organic binders. In addition, the extensive use of highly concentrated acidic solutions and reducing agents and the complex processes generate huge wastewater, which may cause secondary pollution due to emission of wastewater and hazardous gas during the leaching process. Particularly, lithium may be dispersed during these separation and purification processes, which may lead to low lithium recovery rates.

In order to overcome these shortcomings, and extract and purify metals, a pyrometallurgy method may be used *(see* KR 10-2021-0094615, KR 10-2313417, KR 10-0717389, and KR 10-2015-0096849). The pyrometallurgy recycling process has advantages of reducing processing and process costs because massive processing is possible due to fast chemical reactions. In addition, supply materials are relatively flexible, and processes are simple, and the impact of dross on the environment is also at a minor level. Since mixed waste batteries are directly charged into a melting furnace for processing without going through a classification process, it may particularly be also possible to solve problems of fire and explosion danger during the processing of lithium batteries, and there is no consideration of setting an inert atmosphere of crushing process during wet processes.

However, the degree of purity of the recovered metals by the pyrometallurgy process is low, and there is a limitation in recovering high value-added metals. In addition, there is a shortcoming that exhaust gas generated during processes needs to be processed. In particular, since lithium that is different from other valuable metals is absorbed into slags together with low-valued metals, there is also a problem that an additional process is needed to efficiently recover lithium.

Besides, it may be referenced from a paper titled "Overview on pyrometallurgical recycling process of spent lithium-ion battery" (Eunmi Park and 4 others, Resources Recycling, Vol. 31, No. 3, 2022, 27-39), and a paper titled "Trend in research and development of recovery of valuable metallic powder from wasted batteries" (Shunmyung Shin and 4 others, J. Kor. Powd, Met. Inst., Vol. 20, No. 1, 2013).

Moreover, most research results on lithium-based battery recycling are focused on separation and recovering of Co and Ni, and, currently, meager for Li.

Since Li has high specific capacity (3.86 Ahg^-1) and extremely low electrode potential (compared to standard hydrogen electrode -3.04 V), it has been used as an ideal cathode material for high voltage/high energy batteries, and therefore, it may be said to be a very important rare metal.

Therefore, it is important to develop a revolutionary recycling process in order to more efficiently extract and separate lithium among valuable metals from waste batteries containing a high rate of heavy metals and toxic electrolytes.

### Disclosure

### Technical Problem

The present disclosure has been devised to obviate the above limitation. An aspect of the present disclosure is directed to providing a method in which processes are simple and environment friendly, the processing speed is fast, and lithium is efficiently recovered from a process side compared to the conventional method by applying a dry molten smelting in recycling the waste lithium batteries.

### Technical Solution

To solve the above problems, a method of recovering lithium from a waste lithium battery of an embodiment of the present disclosure includes: preprocessing of grinding or crushing a waste lithium battery cell (1); mixing a flux including a Ca compound and a sulfur component with the preprocessed waste lithium battery cell (2); charging the mixture into a heating furnace and melting the same at a high temperature of 1300°C or higher (3); and obtaining a lithium-sulfur compound volatilized from the molten slag in the form of dust by air cooling (4).

The sulfur component may not be mixed with the flux but added after the melting step (3).

A step of discharging a slag layer at the top from the molten slag (3-1) may be added after the melting step (3), and the sulfur component may be added to the discharged slag after the step (3-1) without mixing with the flux together.

A step of obtaining a liquid in which lithium-sulfur compound is dissolved by washing with water (5) is added instead of the step of obtaining the same in the form of dust by air cooling (4).

The waste lithium battery cell includes any one of a cell, a cell pack, a module, an assembly, or a scrap thereof.

The flux further includes at least any one of SiO2, FeO, MnO, and Al2O3.

The sulfur component includes any one of a sulfur, a sulfur ion, a sulfur compound, and a sulfur mixture.

The sulfur component is CaSO4.

The melting step is performed at a temperature of 1300°C to 1800°C.

The lithium-sulfur compound is Li2SO4.

An apparatus for recovering lithium is provided according to the lithium recovery method.

A lithium-sulfur compound for an all solid-state battery is provided according to the lithium recovery method.

### Advantageous Effects

As described above, since waste lithium batteries that are directly crushed and broken into pieces at a cell, a pack, and a module level from an exemplary embodiment of the present disclosure are used, there is an effect of reducing time and cost for preprocessing processes. Since a slag layer including lithium may be also discharged separately, it is possible to operate an apparatus in a small size, and energy costs can be also reduced.

In addition, since an exemplary embodiment of the present disclosure makes use of a pyrometallurgy recycling process, there are advantages in that there is no emission of wastewater and environmental pollution, and massive processing is possible by fast chemical reactions to reduce processing and process costs.

In addition, from an exemplary embodiment of the present disclosure, more than 90% of lithium can be extracted from waste lithium batteries, which is difficult to recover using the conventional wet manner.

### Description of Drawings

FIG. 1 is a flow chart in which the lithium recovery method is described step by step according to an exemplary embodiment of the present disclosure.
FIG. 2 is a flow chart in which the lithium recovery method is described step by step according to another exemplary embodiment of the present disclosure.
FIG. 3 is a flow chart in which the lithium recovery method is described step by step according to still another exemplary embodiment of the present disclosure.

### Mode for Disclosure

Hereinafter, the present disclosure will be described in detail.

All terms and words used in the present specification and claims should not be interpreted as limited to their usual or dictionary meanings, but they should be interpreted as meanings and concepts which conform with the technical ideas of the present disclosure based on the principle that the inventors may suitably define the concept of the terms in order to explain his or her own invention in the best way.

An exemplary embodiment of the present disclosure relates to a method of efficiently recovering valuable metals from end-of-life waste lithium batteries by a pyrometallurgy method.

The term "lithium batteries" used herein is used with the meaning containing all primary batteries, secondary batteries, or all solid-state batteries which contain lithium. The batteries that reached the end of lifespan or are discarded after use are collectively called "waste lithium batteries".

Generally, primary batteries, unlike secondary batteries, may not be electrically recharged once used and discarded. A secondary battery is an energy saving apparatus which may repeatedly charge/discharge approximately over 500 times, and a battery that may convert chemical energy into electrical energy, and vice versa. Representative examples thereof include lithium-ion batteries, lithium polymer batteries, nickel cadmium batteries, nickel hydrogen batteries, etc. Among them, lithium-ion batteries have much better energy storage capacity and lifespan compared to other secondary batteries.

In addition, whereas a lithium-ion battery is configured with a positive electrode, a negative electrode, a separation film, and an electrolyte, an all solid-state battery is a battery of which electrolyte is not in a liquid state but in a solid state. Therefore, since all solid-state batteries do not require a safety apparatus or a separation film for preparing for temperature changes and external shocks, it is possible to reduce cost and to implement high capacity with the same size, and there is an advantage of being free from fire danger.

As key materials used at a positive electrode of a lithium-ion battery, LCO (LiCoO2), NCM (Li[Ni, Co, Mn]O2), NCA (Li[Ni, Co, Al]O2), LMO (LiMn2O4), and LFP (LiFePO4) are used depending on components of metal salts. In addition, at a negative electrode, carbonaceous material such as graphite or silica is used, and copper is used as a current collector.

Smelting is a dry processing method that is most efficiently and widely used to extract valuable metals from waste lithium batteries. A smelting process is conducted at a high temperature, but the biggest difference with roasting is processing temperature. Whereas roasting is an air-solid process (or a solid-solid reaction) which happens below the melting point of a resource, smelting is a process in a liquid state so that a high temperature above the melting point of the resource is needed.

In the smelting process, the battery materials are heated above the melting temperature, then the metal in a liquid state is separated by reduction to form a molten layer that is not mixed. An advantage of the smelting process is that waste batteries with various chemical compositions may be recycled, and cells and modules of batteries may be charged into a heating furnace without a classification and a preprocessing step.

From an exemplary embodiment of the present disclosure, since a large number of valuable metals such as cobalt, copper, aluminum, steel, and lithium are contained among the above component materials, a dry molten smelting is used among one of high temperature heat processing methods so as to efficiently recover the valuable metals as economically valuable waste resources.

The term "smelting" generally means a manner where ore is broken down using heat and a chemical reduction agent to allow metals to remain after driving out other elements into gas or slag. At this time, the reduction agent is generally a source of carbon such as coke or early charcoal, and carbon and aluminum existing in the lithium batteries act as reduction agents. Carbon removes oxygen from ore to remain atom elements. Therefore carbon (C) is oxidated to produce carbon dioxide. In addition, since most ores are impurities, the rock accompanied using flux such as limestone (CaCO3) needs to be removed as slags.

Slag plays a very important role for an efficient smelting process by maximizing the oxidation of low economic valued metals in waste batteries inducing to be included in a slag, and suppressing the oxidation of valuable metals inducing to be included in an alloy layer. In addition, adding flux component during the smelting process allows the design of a slag with a low viscosity and a low melting point, thereby improving the recovery rate of metal components.

After the reduction smelting process is completed, the reduced transition metal has a higher density than the slag and is concentrated into a molten alloy phase, which moves to the floor of the smelting furnace to form a molten metal pool, thereby dividing into a metal alloy layer and a slag layer. Al, Si, Li, Ca, and Mn which are not included in the metal alloy layer but oxidated are included in the slag layer. In particular, since lithium is more stable when it exists as an oxide, a lithium oxide is not reduced but mostly distributed in the slag layer.

In addition, the gas generated during the above process is captured as dust through a bag filter, and discharged as clean gas through a scrubbing device. At this time, a small amount of lithium is captured as dust, but most lithium is discharged as slag, so an additional recovery process is needed. However, an exemplary embodiment of the present disclosure relates to concentratively recovering the lithium by volatilizing in a melting process using sulfur component.

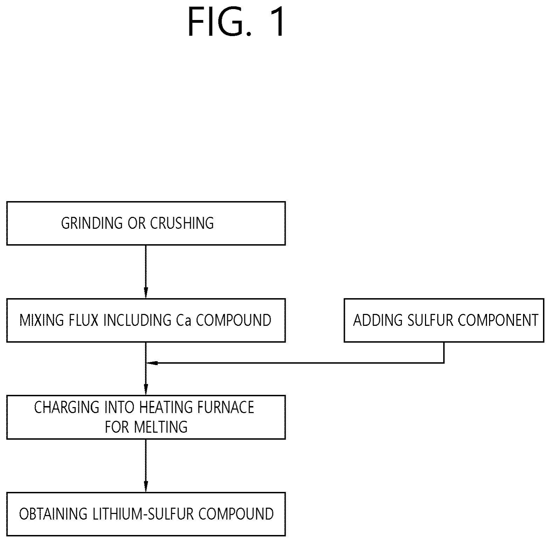

FIG. 1 is a flow chart in which the lithium recovery method is described step by step according to an exemplary embodiment of the present disclosure. In order to recover lithium from a waste lithium battery, an exemplary embodiment of the present disclosure includes: preprocessing of grinding or crushing a waste lithium battery cell (1); mixing a flux including a Ca compound and a sulfur component with the preprocessed waste lithium battery cell (2); charging the mixture into a heating furnace and melting the same at a high temperature of 1300°C or higher (3); and obtaining a lithium-sulfur compound volatilized from the molten slag in the form of dust by air cooling (4).

In summary, an exemplary embodiment of the present disclosure relates to a method of recovering lithium as lithium-sulfur compounds from a waste lithium battery cell. The lithium-sulfur compounds may be Li2SO4.

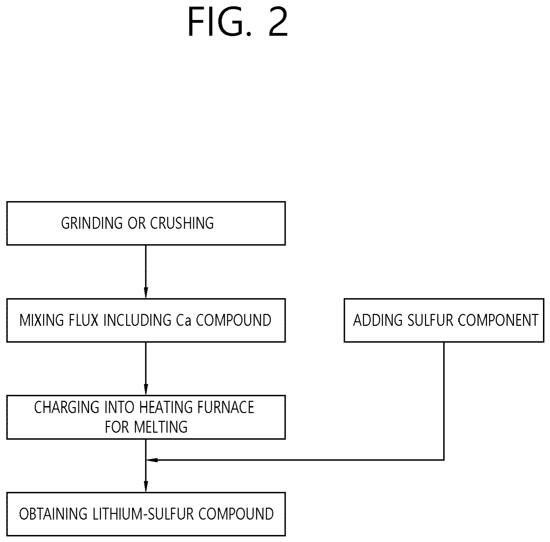

That is, most lithium is volatized into gas and then obtained in the form of dust by air cooling when CaSO4 is added as a sulfur component at the mixing step to generate Li2SO4 from the molten slag according to the chemical reaction formula 1 *(see* FIG. 1) or 2 *(see* FIG. 2) below.

### <Chemical reaction formula 1>

This is a volatilizing mechanism in the melting step, after a flux and CaSO4, a sulfur component, are mixed together in the mixing step.

CaSO4 + C -> CaO + CO(g) + 1/2S2(g)

2Li2O + 3/2S2(g) -> 2Li2S + SO2(g)

Li2S + 2O2(g) -> Li2SO4

### <Chemical reaction formula 2>

This is a volatilizing mechanism in the case of inserting CaSO4 as a sulfur component after the melting step.

Li2O + CaSO4 -> Li2SO4 + CaO

In this formula, regarding the Gibbs free energy, since △G < 0, it is a spontaneous reaction, and as the temperature increases, it reacts with CaSO4 to generate volatile Li2SO4. Li2SO4 has the boiling point of 1377°C, the vapor pressure thereof is approximately 1 atm at 1400 °C, and Li2SO4 is volatilized from 1400°C or below.

At this time, the melting temperature is preferably in the range of 1300°C to 1800°C according to the content of Al2O3 of the injected slag or the composition of slag, and the melting time is also preferable to maintain at the melting temperature for 1 hour or more. Here, it is necessary to block oxygen during temperature rise, inject an inert gas such as N₂ or Ar, or adjust oxygen partial pressure to prevent oxidation of a sulfur component.

As another exemplary embodiment of the present disclosure, the sulfur component is not mixed with a flux but added during the mixing step after the preprocessing step, but may be also added into liquid slag separately during the melting step *(see* FIG. 2).

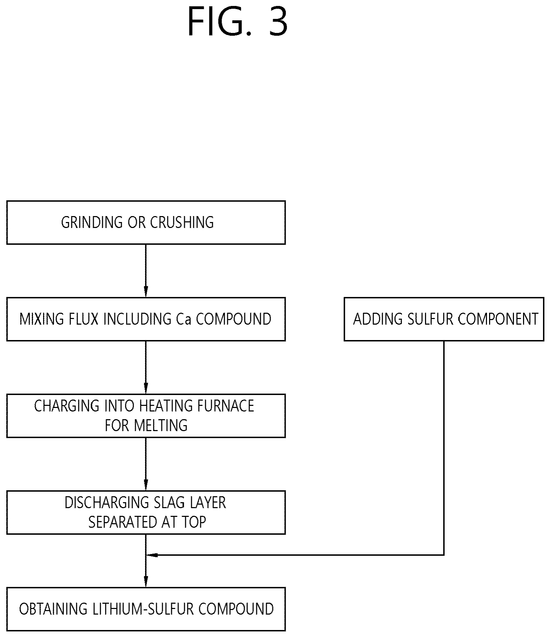

As still another exemplary embodiment of the present disclosure, a step of separating and discharging only the slag layer separated at the top after the melting step may be added *(see* FIG. 3), or Li may be also volatilized and recovered by installing a separate smelting furnace.

Here, the amount of sulfur component added may be used based on stoichiometry for lithium in the slag. That is, 0.5 times to 10 times of equivalent weight of lithium may be mixed, and 1 time to 5 times of equivalent weight of lithium is preferable, but not limited thereto.

The sulfur component mentioned above may be selected from a sulfur, a sulfur ion, a sulfur compound (also including a sulfate salt), and a sulfur mixture. In particular, as examples of a sulfur compound, there are hydrogen sulfide, sulfur dioxide, carbon disulfide, sodium sulfide, copper sulfide, nickel sulfide, copper sulfate, manganese sulfate, nickel sulfate, cobalt sulfate, magnesium sulfate, calcium sulfate, and sodium sulfate, but not limited thereto. Here, calcium sulfate is the most preferable.

The waste lithium battery cell may be a cell, a cell pack, a module, an assembly, or a scrap thereof.

The flux of an exemplary embodiment of the present disclosure may include further at least any one of SiO2, FeO, MnO, and Al2O3 in order to lower the melting point of the slag along with a Ca compound, which is charged into a smelting furnace in fine particle form or powder form. The composition ratio of the components may vary considering melting points, etc., and a particular example of the Ca compound may be CaO or CaCO3.

It is preferable to use CaO-base flux which has high removing efficiency for aluminum that is an impurity contained in large amounts in waste lithium battery, and contains all SiO2, MnO, Al2O3, etc. that have enough viscosity at melting temperature.

The amount of flux may vary according to the type of waste battery cells, but be used 0.5 times to 10 times of the weight of the waste battery cell, and preferably 2 times to 5 times.

In conclusion, by controlling the amount of sulfur component and flux content from the above chemical reaction formulas as well as the ratio of carbon as a reduction agent, a lithium-sulfur compound (Li2SO4) required for recovering waste lithium is obtained. The lithium-sulfur compound may be air cooled and obtained in the form of dust, or be also washed by water and obtained in the form of liquid in which the lithium-sulfur compound is melted.

Li2SO4 vaporized into gas after generation may be separated or collected using scrubber, backhouse filter, electric dust collector, cyclone, etc.

### <Exemplary Embodiment>

Lithium battery modules that have reached the end of lifespan are discharged, crushed, and prepared in the form of flakes. 300 g of the crushed flakes are mixed with a flux, which are inserted into 0.5 L of an alumina pot. At this time, 135 g of sand with SiO2 component is used as a flux, and 170 g of CaCO3 is additionally mixed.

The pot with a sample ore is heated in an electric furnace up to 1400 °C at a rate of 5°C/min in an Ar inert atmosphere, and then maintained for 1 hour to reduce CoO and NiO into Co and Ni metals, and the required amounts of O₂ are added at the speed of 0.97 L/min for oxidation of the remaining C and Al. After O₂ addition is completed, the mixture is maintained in an inert atmosphere using Ar gas for 1 hour at 1400°C to allow separation of layers of the alloy component and the slag component to occur. The slag layer is continuously maintained in an Ar atmosphere and 1400°C, and 1.2 equivalent weights of calcium sulfate (CaSO4), as a lithium volatilizing agent, is added therein in 6 doses of 0.2 equivalent weights each over the period of one hour, resulting in the addition of a total of 95.5 g of CaSO4. The reaction time is further maintained for one hour at 1400°C, and the generated Li2SO4 from this process is volatilized as vapor. After this reaction, the mixture is slowly cooled, and an alloy and a slag are obtained.

From the alloy layer and the slag layer remaining in the heating furnace, each weight is measured, and the content% of each components is analyzed *(see* Table 1). It is confirmed that the generated metal alloy layer includes Co, Cu, Ni, etc., and the slag layer includes Al, Si, Ca, Li, etc.

The lithium-sulfur compound generated with high temperature steam during the smelting process is captured from a bag filter in the form of dust at 100°C or below through a cooling device and a capture device connected to an electric furnace, and exhaust gas is washed and discharged through a scrubbing device. At this time, the weight and the analyzed component of the captured dust are also arranged together from the Table 1.

**[Table 1]**

| Sample ore | Weight (g) | Content of components (%) | | | | | | | |
|---|---|---|---|---|---|---|---|---|---|
| | | Li | Co | Cu | Ni | Al | Si | Ca | |
| Input | Flake | 300 | 2. 7 | 4. 7 | 7. 1 | 14. 1 | 7. 0 | | |
| | Sand | 135 | - | - | - | - | 3. 2 | 44. 7 | 0.3 |
| | Limestone | 170 | - | - | - | - | - | - | 38.0 |
| | CaSO4 | 95. 5 | - | - | - | - | - | - | 29. 4 |
| Output | Alloy | 80 | 0.0 | 16.4 | 25. 2 | 48. 5 | 0.0 | 0.0 | 0.0 |
| | Slag | 319 | 0.1 | 0.1 | 0. 1 | 0.5 | 7. 9 | 18.9 | 29. 1 |
| | Dust | 64 | 12. 1 | 0.0 | 0.0 | 0.0 | 0.0 | 0.0 | 0.0 |

The weights of the generated alloy, slag, and dust are 80 g, 319 g, and 64 g, respectively, and the content of the valuable metals which are components is analyzed and confirmed. In particular, since the remaining amount in the device cannot be checked, the recovered amount of dust is calculated by reverse calculation as the amount excluding Li content which is existing in the alloy and slag using the analysis result of the captured dust.

Therefore, the Li content of the dust is 12.06%, and if it is converted into Li2SO4, it is confirmed from the X-ray diffraction (XRD) that more than 95% of the dust exists as Li2SO4.

For each generated material, the result of calculating the distribution ratio of the valuable metals is arranged in Table 2. It is confirmed that the slag includes 100% of Al, Si, and Ca although partial Li is remained therein, and the dust includes almost all, 96% of Li. That is, the result shows that more than 90% lithium is recovered.

**[Table 2]**

| Product | Distribution ratio (%) | | | | | | |
|---|---|---|---|---|---|---|---|
| | Li | Co | Cu | Ni | Al | Si | Ca |
| Alloy | 0.0 | 97.4 | 99. 1 | 96. 2 | 0.0 | 0.0 | 0.0 |
| Slag | 4. 0 | 2. 6 | 0.9 | 3. 8 | 100 | 100 | 100 |
| Dust | 96. 0 | 0.0 | 0.0 | 0.0 | 0.0 | 0.0 | 0.0 |

It is confirmed that an exemplary embodiment of the present disclosure as described above is very suitable for recovering lithium from waste lithium batteries with a high recovery rate of 90% or more.

In particular, solid electrolyte is characteristically used for all solid-state batteries of which density and stability are improved compared to lithium-ion batteries, and Li2S as well as Li2SO4 is also a main material of the sulfide-base solid electrolyte. Moreover, the Li2SO4 obtained according to an exemplary embodiment of the present disclosure may be recycled as a surface modification material of all solid-state batteries, and also usable as a raw material of the manufacturing process of Li2CO3 or LiOH.

## Claims

1. A method of recovering lithium from a waste lithium battery, the method comprising:
preprocessing of grinding or crushing a waste lithium battery cell (1);
mixing a flux including a Ca compound and a sulfur component with the preprocessed waste lithium battery cell (2);
charging the mixture into a heating furnace and melting the same at a high temperature of 1300°C or higher (3); and
obtaining a lithium-sulfur compound volatilized from the molten slag in the form of dust by air cooling (4).

2. The method of claim 1, wherein the sulfur component is not mixed with the flux but added after the melting (3).

3. The method of claim 1, further comprising:
discharging a slag layer at the top from the molten slag (3-1),
after the melting (3), wherein the sulfur component is not mixed with the flux but added to the discharged slag after the discharging (3-1).

4. The method of claim 1, comprising:
obtaining a liquid in which lithium-sulfur compound is dissolved by washing with water (5),
instead of the obtaining the same in the form of dust by air cooling (4).

5. The method of claim 1, wherein the waste lithium battery cell includes any one of a cell, a cell pack, a module, an assembly, or a scrap thereof.

6. The method of claim 1, wherein the flux further includes at least any one of SiO2, FeO, MnO, and Al2O3 along with Ca compound.

7. The method of claim 1, wherein the sulfur component includes any one of a sulfur, a sulfur ion, a sulfur compound, and a sulfur mixture.

8. The method of claim 7, wherein the sulfur component is CaSO4.

9. The method of claim 1, wherein the melting is performed at a temperature of 1300°C to 1800°C.

10. The method of claim 1, wherein the lithium-sulfur component is Li2SO4.

11. An apparatus for recovering lithium according to the method of any one of claims 1 to 4.

12. A lithium-sulfur compound for an all solid-state battery obtained according to the method of any one of claims 1 to 4.
